# EUROPÄISCHE PATENTSCHRIFT

(11) **EP 1 570 419 B1**
(45) Veröffentlichungstag und Bekanntmachung des Hinweises auf die Patenterteilung: **01.10.2008**
(21) Anmeldenummer: 03776631.8
(22) Anmeldetag: 06.11.2003
(51) Int. Cl.: G06K 19/06, G07D 7/00, G07D 7/12

(54) **KARTE MIT OPTISCHER BEUGUNGSSTRUKTUR**
CARD HAVING AN OPTICAL DIFFRACTION STRUCTURE
CARTE A STRUCTURE DE DIFFRACTION OPTIQUE

(30) Priorität: 07.11.2002 AT 16752002
(43) Veröffentlichungstag der Anmeldung: 07.09.2005
(73) Patentinhaber: Oesterreichische Banknoten- und Sicherheitsdruck GmbH, 1096 Wien (AT)
(72) Erfinder: PASS, Josef, c/o United Access GmbH, A-3430 Tulln (AT); DEINHAMMER, Harald, A-1096 Wien (AT)
(74) Vertreter: Gibler, Ferdinand
(86) Internationale Anmeldenummer: PCT/AT2003/000330
(87) Internationale Veröffentlichungsnummer: WO 2004/042650

(56) Entgegenhaltungen:
- EP-A- 0 772 102
- EP-A- 1 147 912
- EP-A- 1 197 350
- WO-A-96/15912
- FR-A- 2 822 571

## Beschreibung

Die Erfindung betrifft ein Verfahren zur Überprüfung eines Sicherheitsdokuments, wobei das Sicherheitsdokument wenigstens ein Moiré-Muster aufweist, wobei das Moiré-Muster ein Sicherheitsmerkmal aufweist, wobei das Sicherheitsmerkmal mit einer Linse detektierbar ist, wobei die Linse eine optische Beugungsstruktur aufweist.

Aus der EP 1 147 912 A2 ist ein Sicherheitsdokument bekannt, welches ein ein Linienmuster umfassendes Sicherheitsmerknal und ein ein weiteres Linienmuster beinhaltendes Sichtfenster aufweist, wobei das Sichtfenster über das Linienmuster gefaltet werden kann, wodurch infolge von Interferenz das Sicherheitsmerkmal ersichtlich ist. Nachteilig an einem Sicherheitsdokument gemäß der EP 1 147 912 A2 ist, daß bei einer Fälschung des Sicherheitsdokumentes sowohl das das Sicherheitsmerkmal enthaltende Linienmuster als auch das weitere Linienmuster, welches zur Überprüfung des Sicherheitsmerkmals verwendet wird, vom Fälscher erzeugt wird. Daher ist es für einen Fälscher ausreichend, wenn bei einer Fälschung mit einem veränderten Linienmuster des Sichtfensters das Sicherheitsmerkmal in einem ebenfalls veränderten Linienmuster detektiert werden kann. Eine exakte Nachbildung des Linienmusters und/oder des weiteren Linienmusters ist daher nicht erforderlich. Eine Fälschung des Sicherheitsdokumentes mit einem andersartigen Linienmuster kann somit nicht als Fälschung detektiert werden, sofern es zusammen mit dem weiteren Linienmuster des

Sichtfensters das bekannte Sicherheitsmerkmal ergibt.

Aus der WO 96/15912 A ist ein Verfahren zur Herstellung eines Datenträgers bekannt, welcher eine Kreditkarte sein kann. Dabei werden Linsenstrukturen bevorzugt während der

Laminierung in den Datenträger eingebracht, indem eine der Laminierplatten mit der negativen Linsenrasterstruktur versehen wird.

Die EP 1 197 350 A zeigt ein Wertdokument mit einem optischen Merkmal, welches ein wenigstens zweikanaliges Hologramm zur holographischen Rekonstruktion verschiedener

Bilder aus verschiedenen Blickrichtungen umfasst.

Die EP 0 772 102 A betrifft ein Verfahren zur Herstellung von Echtheitsmerkmalen aufweisenden Hologrammen, die Kopien eines Masterhologramms sind, wobei das

Masterhologramm ein Hologramm eines zufällig strukturierten optischen Elements ist.

Die FR 2 822 571 A offenbart eine Chipkarte mit einer Vorrichtung zur individuellen Sicherung. Die Karte weist einen transparenten Bereich mit einer Vielzahl an Mikrolinsen auf.

Auf de Vorderseite des 5 Euro-Scheines befinded sich rechts unten ein Moiré-Muster (Linienmuster), bei dem der Abstand zwischen den Linien variiert, die Anzahl der Linien pro Zentimeter jedoch konstant ist. Das Muster ist dreieckig.

Aufgabe der Erfindung ist es, ein Verfahren der eingangs genannten Art anzugeben, bei dem die bekannten Nachteile vermieden werden, bei dem ein ein unterschiedliches Moiré-Muster aufweisendes Sicherheitsdokument als Fälschung detektiert werden kann und bei dem die zur Detektion erforderliche Linse auf einfache Weise verfügbar ist.

Erfindungsgemäß wird dies dadurch erreicht, dass das Sicherheitsmerkmal des Sicherheitsdokuments mit einer von dem Sicherheitsdokument unterschiedlichen, aus mehreren Schichten aufgebauten laminierten Karte detektiert wird, wobei die Karte mit der eine optische Beugungsstruktur aufweisenden Linse versehen ist, die in einem Bereich der Karte angeordnet ist, in dem die Karte über deren gesamte Dicke transparent ist. Die Erfindung ist den Ansprüchen deniert.

Dadurch ergibt sich der Vorteil, daß das Sicherheitsmerkmal und die die optische Beugungsstruktur aufweisende Linse auf unterschiedlichen Gegenständen angeordnet sind und nicht von einem Fälscher aufeinander abgestimmt werden können, ein unterschiedliches Moiré-Muster somit als solches detektiert werden kann. Die Anordnung der die optische Beugungsstruktur aufweisenden Linse in dem transparenten Bereich einer aus mehreren Schichten laminierten Karte hat den Vorteil, daß die Linse auf Bankomatkarten, Kreditkarten od. dgl. bereitgestellt werden kann und somit einfach verfügbar ist und auf einem Gegenstand angeordnet ist, der von einem Großteil der Bevölkerung ständig bei sich getragen wird und das Mitführen einer zusätzlichen Karte oder eines Dekoders nicht erforderlich ist. Weiters weist die Karte den Vorteil auf, daß sie einen Schutz der Linse gegenüber einer mechanischen Beschädigung, insbesondere einem Knicken od. dgl., darstellt. Ein weiterer Vorteil des erfindungsgemäßen Verfahrens ist, daß mit dem Sicherheitsdokument auch die Echtheit der Karte überprüft werden kann.

In Weiterführung der Erfindung kann vorgesehen sein, dass das Sicherheitsdokument eine Banknote ist.

Gemäß einer anderen Ausführungsform der Erfindung kann vorgesehen sein, dass die Linse eine Lentikularlinse ist, wobei als Lentikularlinse eine Linse mit einer vorgebbaren Anzahl an Linsen pro Zentimeter bezeichnet wird.

In weiterer Ausgestaltung der Erfindung kann vorgesehen sein, dass die Karte eine Bankomatkarte und/oder eine Kreditkarte ist.

Die Erfindung betrifft weiters eine aus mehreren Schichten laminierte Karte, welche an wenigstens einer ersten Seite eine optische Beugungsstruktur aufweist.

Aus der US 6 016 225 A ist eine Karte bekannt, welche an einer Seite einer Schicht als Lendkularlinse ausgebildet ist. Mit der Lentikularlinse können an der anderen Seite der Schicht aufgedruckte Informationen detektiert werden, wobei die detektierten Informationen vom Betrachtungswinkel abhängen.

Weitere Aufgabe der Erfindung ist es, eine Karte der oben genannten Art anzugeben, mit der das erfindungsgemäße Verfahren einfach durchgeführt werden kann.

Eine weitere Aufgabe der Erfindung ist es, eine Karte der oben genannten Art anzugeben, die ein zusätzliches Sicherheitsmerkmal aufweist.

Erfindungsgemäß wird dies dadurch erreicht, dass die optische Beugungsstruktur als Lentikularlinse, wobei als Lentikularünse eine Linse mit einer vorgebbaren Anzahl an Linsen pro Zentimeter bezeichnet wird, ausgebildet ist, die in einem ersten Abschnitt eine erste Anzahl an Linsen pro Zentimeter und in einem zweiten Abschnitt eine vom ersten Abschnitt unterschiedliche zweite Anzahl an Linsen pro Zentimeter aufweist, wobei die Lentikularlinse in einem Bereich der Karte angeordnet ist, in dem die Karte über deren gesamte Dicke transparent ist.

Dadurch ergibt sich der Vorteil, daß herkömmliche Karten wie z.B. Bankomatkarten, Kreditkarten od. dgl. neben ihren bekannten Merkmalen auf einfache Weise zusätzlich mit einer die optische Beugungsstruktur aufweisenden Linse ausgebildet werden können. Mit einem vorgebbaren Moiré-Muster kann die korrekte Ausführung der optischen Beugungsstrukturen und dadurch die Echtheit der Karte überprüft werden. Eine Lentikularlinse stellt eine einfache Beugungsstruktur dar, mit der ein in einem Moiré-Muster od. dgl. enthaltenes Sicherheitsmerkmal detektiert werden kann. Durch die Ausführung mit einer unterschiedlichen Anzahl an Linsen pro Zentimeter im ersten Abschnitt und im zweiten Abschnitt kann das Moiré-Muster des Sicherheitsdokumentes ebenfalls mit unterschiedlichen Abständen der Linien in einem ersten Bereich und einem zweiten Bereich ausgeführt werden, wodurch die Fälschungssicherheit des Sicherheitsmerkmals weiter verbessert wird.

In Weiterbildung der Erfindung kann vorgesehen sein, dass die Karte eine Bankomatkarte und/oder eine Kreditkarte ist.

Weiters kann vorgesehen sein, dass die Anzahl der Linsen pro Zentimeter der Lentikularlinse zumindest bereichsweise in einer Richtung ansteigt, wobei eine hohe Gestaltungsmöglichkeit des Moiré-Musters des Sicherheitsdokuments und eine gute Fälschungssicherheit gegeben ist.

Die Erfindung betrifft weiters ein Sicherheitsdokument, wobei an wenigstens einer Seite des Sicherheitsdokumentes ein Moiré-Muster angeordnet ist, wobei das Moiré-Muster ein mittels eines Linienversatzes codiertes Sicherheitsmerkmal aufweist, wobei das Sicherheitsmerkmal mit einer eine optische Beugungsstruktur aufweisenden Linse detektierbar ist.

Weitere Aufgabe der Erfindung ist es ein Sicherheitsdokument der oben genannten Art anzugeben, bei dem das Moiré-Muster viele Gestaltungsmöglichkeiten und eine hohe Fälschungssicherheit aufweist.

Erfindungsgemäß wird dies dadurch erreicht, dass das Moirée-Muster in einem ersten Abschnitt eine erste Anzahl von Linien pro Zentimeter und in einem zweiten Abschnitt eine vom ersten Abschnitt unterschiedliche zweite Anzahl von Linien pro Zentimeter aufweist.

Dadurch ergibt sich der Vorteil, daß eine Fälschung des Sicherheitsdokumentes auch bei einem Nachbilden des das Sicherheitsmerkmal codierenden Linienversatzes im Moiré-Muster durch einen Fälscher detektiert werden kann, sofern der Wechsel des Linienabstandes in der Fälschung nicht korrekt aufscheint, wodurch die Fälschungssicherheit des Sicherheitsdokumentes erhöht wird. Weiters werden durch die Ausbildung mit einem unterschiedlichen Linienabstand die Gestaltungsmöglichkeiten des Moiré-Musters vergrößert.

Gemäß einer weiteren Ausgestaltung der Erfindung kann vorgesehen sein, dass es als Banknote ausgebildet ist.

In weiterer Ausgestaltung der Erfindung kann vorgesehen sein, dass in dem Moiré-Muster bereichsweise die Anzahl der Linien pro Zentimeter in einer Richtung ansteigt.

Bei einem Verfahren zur Herstellung einer aus mehreren Schichten laminierten Karte, insbesondere Bankomatkarte, Kreditkarte od. dgl., welche an wenigstens einer ersten Seite eine optische Beugungsstruktur, insbesondere eine Lentikularlinse od. dgl., aufweist, kann die Karte einfach, schnell und kostengünstig hergestellt werden, indem das Profil der optischen Beugungsstruktur während des Laminierens der Karte zumindest in die äußerste Schicht der wenigstens ersten Seite der Karte mittels einer Prägeplatte od. dgl. eingeprägt wird.

Dabei ist die optische Beugungsstruktur ohne zusätzlichen Arbeitsschritt herstellbar. Weiters kann die optische Beugungsstruktur einfach auf vorgebbaren Bereichen der Karte ausgeführt werden, wobei die restlichen Bereiche der Karte ohne optische Beugungsstruktur ausgebildet werden und die optische Beugungsstruktur auf der Karte exakt positioniert und mit variablen Abständen od. dgl. ausgebildet werden.

Die Erfindung wird unter Bezugnahme auf die beigeschlossenen Zeichnungen, in welchen Ausführungsformen dargestellt sind, näher beschrieben. Dabei zeigt:
Fig. 1 die Vorderseite einer erfindungsgemäßen Karte mit einem transparenten Bereich und einer optischen Beugungsstruktur;
Fig. 2 die Rückseite der Karte gemäß Fig. 1;
Fig. 3 den Schnitt entlang der Linie AA gemäß Fig. 1; und
Fig. 4 ein erfindungsgemäßes Sicherheitsdokument mit einem Moiré-Muster.

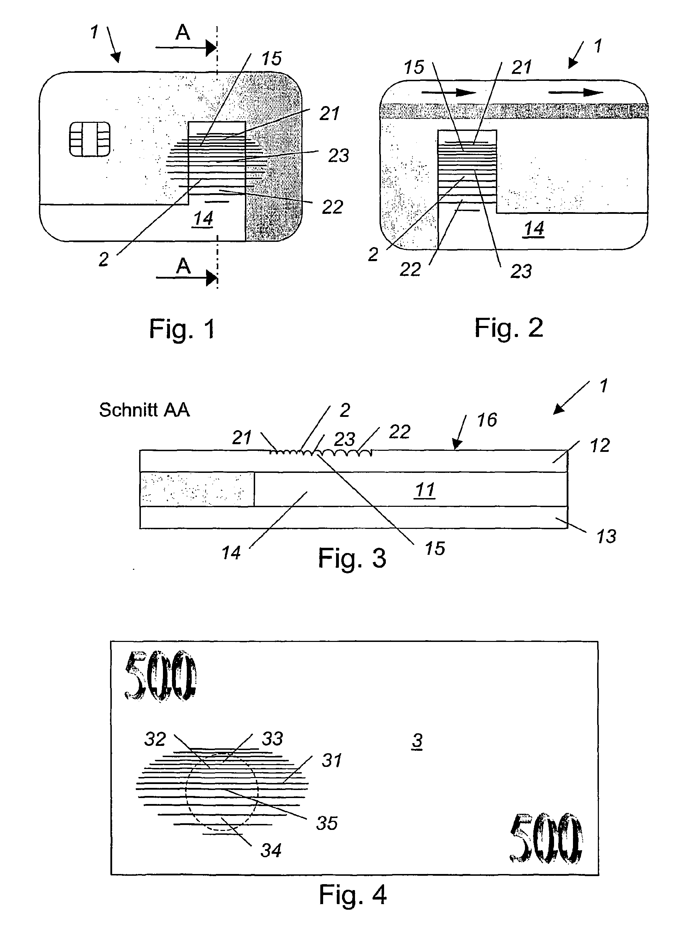

In den Fig. 1 bis 3 ist eine laminierte Karte 1 dargestellt, welche an einer ersten Seite 16 eine optische Beugungsstruktur 15 aufweist, welche einen durchscheinenden Bereich 14 aufweist, wobei der durchscheinende Bereich 14 transparent, monochrom, verlaufend od. dgl. sein kann. Die optische Beugungsstruktur 15 ist teilweise im durchscheinenden Bereich 14 ausgebildet. Gemäß anderen Ausführungsformen der erfindungsgemäßen Karte 1 kann vorgesehen sein, daß die optische Beugungsstruktur 14 vollständig im durchscheinenden Bereich 14 ausgebildet ist. Weiters kann die Karte 1 mehrere durchscheinende Bereiche 14 aufweisen, wobei die optische Beugungsstruktur 14 in einem oder mehreren der durchscheinenden Bereichen 14 angeordnet sein kann.

Die Karte 1 kann eine Kernschicht 11, eine erste Schicht 12 und eine zweite Schicht 13 umfassen, wobei auch nur zwei Schichten oder weitere Schichten vorgesehen sein können.

Die Karte 1 kann insbesondere als Bankomatkarte, Kreditkarte od. dgl. ausgebildet sein.

Dadurch ergibt sich der Vorteil, daß die Karte 1 leicht verfügbar ist, da viele Personen eine derartige Karte besitzen und meistens bei sich führen.

Bei anderen Ausführungsformen der erfindungsgemäßen Karte 1 kann vorgesehen sein, daß die optische Beugungsstruktur 15 auch an der der ersten Seite 16 gegenüberliegenden Seite ausgebildet ist und/oder in einer der Schichten 11, 12, 13 der Karte 1 ausgebildet und/oder auf diese aufgedruckt ist.

Wie aus Fig. 3 ersichtlich ist, kann die optische Beugungsstruktur 15 als Lentikularlinse 2 ausgebildet sein. Bei anderen Ausführungsformen kann die optische Beugungsstruktur als Polarisationsfilter, als Farbfilter od. dgl. ausgebildet sein.

Die Fälschungssicherheit des mit der Lentikularlinse 2 detektierbaren Sicherheitsmerkmals 32 kann verbessert werden, wenn die Anzahl der Linsen pro Zentimeter nicht über den gesamten Bereich der Lentikularlinse 2 konstant ausgebildet ist. Dabei kann die Lentikularlinse 2 in einem ersten Abschnitt 21 eine erste Anzahl an Linsen pro Zentimeter und in einem zweiten Abschnitt 22 eine vom ersten Abschnitt 21 unterschiedliche Anzahl an Linsen pro Zentimeter aufweisen. Bei einer anderen Ausführungsform der erfindungsgemäßen Karte kann vorgesehen sein, daß die Anzahl der Linsen pro Zentimeter der Lentikularlinse 2 zumindest bereichsweise in einer Richtung ansteigt. Dabei kann der erste Abschnitt 21 an den zweiten Abschnitt 22 angrenzen und/oder durch einen dritten Abschnitt 23 mit in einer Richtung ansteigender Anzahl an Linsen pro Zentimeter getrennt sein. In anderen Ausführungsformen der Lentikularlinse 2 kann auch nur der dritte Abschnitt 23, gegebenenfalls zusammen mit dem ersten Abschnitt 21 oder dem zweiten Abschnitt 22 vorgesehen sein.

Bei einem vorteilhaften Herstellungsverfahren der erfindungsgemäßen aus mehreren Schichten 11, 12, 13 laminierten Karte 1 wird das Profil der optischen Beugungsstruktur 15 während des Laminierens der Karte 1 zumindest in die erste Schicht 12, welches die äußerste Schicht ist, der wenigstens ersten Seite 16 der Karte 1 mittels einer Prägeplatte od. dgl. eingeprägt. Dadurch kann die optische Beugungsstruktur 15 ohne zusätzlichen Arbeitsschritt aufgebracht werden, wobei die optische Beugungsstruktur 15 exakt positioniert werden kann. Weiters kann die optische Beugungstruktur 15 auf einfache Weise auf vorbestimmbare Bereiche der erfindungsgemäßen Karte 1 beschränkt werden.

In Fig. 4 ist ein Sicherheitsdokument 3, welches insbesondere eine Banknote od. dgl. sein kann, dargestellt, wobei an wenigstens einer Seite der Banknote 3 ein Moiré-Muster 31 od. dgl. ausgebildet ist, welches ein Sicherheitsmerkmal 32 aufweist, welches mit der die optische Beugungsstruktur 15 aufweisenden Linse detektierbar ist. In Fig. 4 ist der Bereich, in dem das Sicherheitsmerkmal 32 ausgebildet ist, durch die strichlierte Linie dargestellt. Entsprechend der Ausbildung der optischen Beugungsstruktur 15 kann die Fälschungssicherheit des Moiré-Musters 31 dadurch erhöht werden, daß das Moiré-Muster in einem ersten Abschnitt 33 eine erste Anzahl an Linien pro Zentimeter und in einem zweiten Abschnitt 34 eine vom ersten Abschnitt 33 unterschiedliche zweite Anzahl an Linien pro Zentimeter aufweist und/oder bereichsweise die Anzahl der Linien pro Zentimeter in einer Richtung ansteigt. Dabei kann der erste Abschnitt 33 an den zweiten Abschnitt 34 angrenzen oder durch einen dritten Abschnitt 35 mit in einer Richtung ansteigender Anzahl an Linien pro Zentimeter getrennt sein. In anderen Ausführungsformen des erfindungsgemäßen Sicherheitsdokumentes 3 kann auch nur der dritte Abschnitt 35, gegebenenfalls zusammen mit dem ersten Abschnitt 33 oder dem zweiten Abschnitt 34 vorgesehen sein.

Bei der Überprüfung des Sicherheitsmerkmals 32 des Sicherheitsdokumentes 3 kann das Sicherheitsmerkmal 32 mit dem als die optische Beugungsstruktur 15 aufweisende Linse ausgebildeten durchscheinenden Bereich 14 der aus mehreren Schichten 11, 12, 13 laminierten Karte 1 detektiert werden. Dadurch wird eine Trennung zwischen dem das Sicherheitsmerkmal 32 aufweisenden Sicherheitsdokument 3 und der die Überprüfungseinrichtung aufweisenden Karte 1 erreicht. Wird die Karte als Bankomatkarte, Kreditkarte od. dgl. ausgebildet, so kann sichergestellt werden, daß viele Personen die Überprüfungseinrichtung für das Sicherheitsdokument 3 besitzen und üblicherweise auch mit sich führen. Weiters ergibt sich durch diese Ausbildung auch die Möglichkeit die Echtheit einer Karte 1 zu überprüfen.

## Patentansprüche

1. Verfahren zur Überprüfung eines Sicherheitsdokuments (3),
wobei das Sicherheitsdokument (3) wenigstens ein Moiré-Muster (31) aufweist,
wobei das Moiré-Muster (31) ein Sicherheitsmerkmal (32) aufweist,
wobei das Sicherheitsmerkmal (32) mit einer Linse detektierbar ist,
wobei die Linse eine optische Beugungsstruktur (15) aufweist,
**dadurch gekennzeichnet, dass**
das Sicherheitsmerkmal des Sicherheitsdokuments (3) mit einer von dem Sicherheitsdokument (3) unterschiedlichen, aus mehreren Schichten (12, 11, 13) aufgebauten laminierten Karte (1) detektiert wird,
wobei die Karte (1) mit der eine optische Beugungsstruktur (15) aufweisenden Linse versehen ist, die in einem Bereich der Karte (I) angeordnet ist, in dem die Karte (1) über deren gesamte Dicke transparent ist.

2. Verfahren nach Anspruch 1, **dadurch gekennzeichnet, dass** das Sicherheitsdokument (3) eine Banknote ist.

3. Verfahren nach Anspruch 1 oder 2, **dadurch gekennzeichnet, dass** die Linse eine Lentikularlinse (2) ist, wobei als Lentikularlinse (2) eine Linse mit einer vorgebbaren Anzahl an Linsen pro Zentimeter bezeichnet wird.

4. Verfahren nach Anspruch 1, 2 oder 3, **dadurch gekennzeichnet, dass** die Karte eine Bankomatkarte und/oder eine Kreditkarte ist.

5. Karte, wobei die Karte aus mehreren laminierten Schichten (11, 12, 13) aufgebaut ist und an einer Seite eine optische Beugungsstruktur (15) aufweist
**dadurch gekennzeichnet, dass**
die optische Beugungsstruktur (15) als Lentikularlinse (2) ausgebildet ist, wobei als Lentikularlinse (2) eine Linse mit einer vorgebbaren Anzahl an Linsen pro Zentimeter bezeichnet wird, die in einem ersten Abschnitt (21) eine erste Anzahl an Linsen pro Zentimeter und in einem zweiten Abschnitt (22) **eine von der ersten Anzahl** unterschiedliche zweite Anzahl an Linsen pro Zentimeter aufweist,
wobei die Lentikularlinse (2) in einem Bereich der Karte (1) angeordnet ist, in dem die Karte (1) über deren gesamte Dicke transparent ist.

6. Karte nach Anspruch 5, **dadurch gekennzeichnet, dass** die Karte eine Bankomatkarte und/oder eine Kreditkarte ist.

7. Sicherheitsdokument (3), wobei an wenigstens einer Seite des Sicherheitsdokumentes (3) ein Moiré-Muster (31) angeordnet ist,
wobei das Moiré-Muster (31) ein mittels eines Linienversatzes codiertes Sicherheitsmerkmal (32) aufweist,
wobei das Sicherheitsmerkmal (32) mit einer eine optische Beugungsstruktur aufweisenden Linse detektierbar ist,
**dadurch gekennzeichnet, dass**
das Moiré-Muster (31) in einem ersten Abschnitt (33) eine erste Anzahl von Linien pro Zentimeter und in einem zweiten Abschnitt (34) eine von der ersten Anzahl unterschiedliche zweite Anzahl von Linien pro Zentimeter aufweist.

8. Sicherheitsdokument nach Anspruch 7, **dadurch gekennzeichnet, dass** es als Banknote ausgebildet ist.

9. Sicherheitsdokument nach Anspruch 7 oder 8, **dadurch gekennzeichnet, dass** in dem Moiré-Muster (31) bereichsweise die Anzahl der Linien pro Zentimeter in einer Richtung ansteigt.

## Claims

1. A method for checking a security document (3), with the security document (3) comprising at least one Moiré pattern (31), with the Moiré pattern (31) having a security feature (32), with the security feature (32) being detectable with a lens, with the lens having an optical diffraction structure (15), **characterized in that** the security feature of the security document (3) is detected with a laminated card (1) which is different from the security document (3) and is composed of several layers (12, 11, 13), with the card (1) being provided with a lens having an optical diffraction structure (15) which is arranged in a region of the card (1) in which the card (1) is transparent over its entire thickness.

2. A method according to claim 1, **characterized in that** the security document (3) is a banknote.

3. A method according to claim 1 or 2, **characterized in that** the lens is a lenticular lens (2), with a lens with a predeterminable number of lenses per centimeter being designated as a lenticular lens (2).

4. A method according to claim 1, 2 or 3, **characterized in that** the card is an ATM debit card and/or a credit card.

5. A card, with the card being composed of several laminated layers (11, 12, 13) and comprising on one side an optical diffraction structure (15), **characterized in that** the optical diffraction structure (15) is arranged as a lenticular lens (2), with a lens with a predeterminable number of lenses per centimeter being designated as a lenticular lens (2) which comprises in a first section (21) a first number of lenses per centimeter and in a second section (22) a second number of lenses per centimeter which differs from the first number, with the lenticular lens (2) being arranged in an area of the card (1) in which the card (1) is transparent over its entire thickness.

6. A card according to claim 5, **characterized in** the card is an ATM debit card and/or a credit card.

7. A security document (3), with a Moiré pattern (31) being arranged on at least one side of the security document (3), with the Moiré pattern (31) having a security feature (32) encoded by means of a line offset, with the security feature (32) being detectable with a lens having an optical diffraction structure, **characterized in that** the Moiré pattern (31) comprises in a first section (33) a first number of lines per centimeter and in a second section (34) a second number of lines per centimeter which differs from the first number.

8. A security document according to claim 7, **characterized in that** it is arranged as a banknote.

9. A security document according to claim 7 or 8, **characterized in that** the number of lines per centimeter increases in sections in one direction in the Moiré pattern (31).

## Revendications

1. Procédé pour la vérification d'un document de sécurité (3), lequel document de sécurité (3) présente au moins un motif moiré (31),
ce motif moiré (31) présentant une caractéristique de sécurité (32),
laquelle caractéristique de sécurité (32) peut être détectée avec une lentille,
la lentille présentant une structure de diffraction optique (15),
**caractérisé en ce que** la caractéristique de sécurité du document de sécurité (3) est détectée avec une carte stratifiée (1) différente du document de sécurité (3) et composée de plusieurs couches (12, 11, 13),
laquelle carte (1) est dotée d'une lentille présentant une structure de diffraction optique (15) disposée dans une zone de la carte (1) dans laquelle la carte (1) est transparente sur toute son épaisseur.

2. Procédé selon la revendication 1, **caractérisé en ce que** le document de sécurité (3) est un billet de banque.

3. Procédé selon la revendication 1 ou 2, **caractérisé en ce que** la lentille est une lentille lenticulaire (2), laquelle lentille lenticulaire (2) est une lentille ayant un nombre pouvant être prédéterminé de lentilles par centimètre.

4. Procédé selon la revendication 1, 2 ou 3, **caractérisé en ce que** la carte est une carte de retrait bancaire et/ou une carte de crédit.

5. Carte, laquelle carte se compose de plusieurs couches (11, 12, 13) stratifiées et présente sur une face une structure de diffraction optique (15),
**caractérisée en ce que** la structure de diffraction optique (15) est conformée comme une lentille lenticulaire (2), la lentille lenticulaire (2) étant une lentille avec un nombre pouvant être prédéterminé de lentilles par centimètre, qui comporte dans une première partie (21) un premier nombre de lentilles par centimètre et dans une deuxième partie (22) un nombre différent du premier nombre de lentilles par centimètre,
la lentille lenticulaire (2) étant disposée dans une partie de la carte (1) où la carte (1) est transparente sur toute son épaisseur.

6. Carte selon la revendication 5, **caractérisée en ce que** la carte est une carte de retrait bancaire et/ou une carte de crédit.

7. Document de sécurité (3), dans lequel un motif moiré (31) est disposé sur au moins une face du document de sécurité (3),
dans lequel le motif moiré (31) présente au moins une caractéristique de sécurité (32) codée au moyen d'un décalage des lignes,
la caractéristique de sécurité (32) pouvant être détectée au moyen d'une lentille présentant une structure de diffraction optique,
**caractérisé en ce que** le motif moiré (31) présente dans une première partie (33) un premier nombre de lignes par centimètre et dans une deuxième partie (34) un deuxième nombre de lignes par centimètre différent du premier nombre.

8. Document de sécurité selon la revendication 7, **caractérisé en ce qu'**il est conformé comme un billet de banque.

9. Document de sécurité selon la revendication 7 ou 8, **caractérisé en ce que** le nombre de lignes par centimètres dans le motif moiré (31) augmente par centimètre dans certaines zones.
